# EUROPÄISCHE PATENTSCHRIFT

(11) **EP 0 909 904 B1**
(45) Veröffentlichungstag und Bekanntmachung des Hinweises auf die Patenterteilung: **09.02.2005**
(21) Anmeldenummer: 98119043.2
(22) Anmeldetag: 08.10.1998
(51) Int. Cl.: F16F 9/05

(54) **System, enthaltend einen Luftfederbalg und einen Abrollkolben, der sich auf einer gekrümmten Bahn bewegt**
System containing a an air spring rolling lobe and an unrolling piston moving along a curved path
Système contenant un soufflet de ressort pneumatique et un piston de déroulage parcourant un parcours courbe.

(30) Priorität: 15.10.1997 DE 19745415
(43) Veröffentlichungstag der Anmeldung: 21.04.1999
(73) Patentinhaber: Continental Aktiengesellschaft, 30165 Hannover (DE)
(72) Erfinder: Wode, Stefan Dr., 30851 Langenhagen (DE); Thurow, Gerhard, 30823 Garbsen (DE); Kirsten, Bernhard, 30161 Hannover (DE); Jeischik, Joachim, 30974 Wennigsen (DE)

(56) Entgegenhaltungen:
- EP-A- 0 552 458
- DE-B- 1 048 165

## Beschreibung

Die Erfindung betrifft ein System gemäß dem Oberbegriff des Anspruchs 1.

Moderne Kraftfahrzeuge haben bereits heute häufig eine Luftfederung, die bevorzugt an der Hinterachse zum Einsatz kommt, da mit Hilfe der Luftfederung eine Niveau-Regulierung auf einfache Art und Weise möglich ist. Die Hinterachse eines Kraftfahrzeuges verfügt über Lenker, die an ihrem einen Ende jeweils drehbar am Kraftfahrzeug aufgehängt sind. Im Bereich des anderen Endes der Lenker sind die Hinterräder und die Abrollkolben mit den ihnen zugeordneten Luftfederbälgen angeordnet. Das dem Abrollkolben gegenüberliegende Ende des Luftfederbalges ist mit Hilfe einer Deckplatte am Fahrzeugaufbau befestigt. Bei einem Federvorgang werden die Lenker um ihre jeweiligen Aufhängungspunkte an dem Kraftfahrzeug geschwenkt, so daß es zu einer Relativbewegung zwischen der Hinterachse und dem Fahrzeugaufbau kommt. Die Hinterachse und damit die Abrollkolben bewegen sich bei einem Federvorgang auf einer gekrümmten Bahn, deren Krümmungsradius durch die Länge der Lenker weitgehend vorgegeben ist. Bei der Bewegung tauchen die Abrollkolben in die ihnen zugeordneten Luftfederbälge ein, bzw. werden aus ihnen herausgezogen.

Da bei einer Relativbewegung zwischen dem Abrollkolben und dem Luftfederbalg der Luftfederbalg versucht, der gekrümmten Bahn des Abrollkolbens "zu folgen", kann es zu einem seitlichen Versatz des Luftfederbalges zur Deckplatte, mit der der Luftfederbalg an dem Fahrzeugaufbau befestigt ist, oder zur Ausbildung einer Abrollfalte, die auf ihrem Umfang eine nichtkonstante Breite aufweist, kommen. Sowohl durch den seitlichen Versatz zwischen dem Luftfederbalg und der Deckplatte als auch durch die Ausbildung einer Abrollfalte, die auf ihrem Umfang eine nichtkonstante Breite aufweist, kommt es innerhalb des Luftfederbalges zu Spannungen, die die Lebensdauer des Luftfederbalges und damit der Luftfeder verkürzen.

Die Erfindung betrifft ein System mit einem Luftfederbalg, der auf einem gekrümmten Abrollkolben abrollt und einen Abrollkolben für ein solches System. Aus der DE-AS 1 048 165 ist ein System gemäß des Oberbegriffes des nebengeordneten Anspruchs 1 bekannt. Der gekrümmte Abrollbkolben hat den Vorteil, daß während des Abrollens der Luftfeder auf der Luftfeder wirkende Querkräfte ausgeglichen werden können. Darüber hinaus weist die Abrollfalte des Luftfederbalges über weite Bereiche des Federweges eine konstante Breite auf, so daß es innerhalb des Luftfederbalges nicht zu Spannungen kommt, die seine Lebensdauer verkürzen, und das oben angesprochene Problem gelöst ist.

Die Krümmung des Abrollkolbens weist jedoch den Nachteil auf, daß bei einer Einfederung des Abrollkolbens in den Hohlraum der Luftfeder sich der Abrollkolben der Wand des Luftfederbalges annähert. Bei einem teifen Eintauchen des Abrollkolbens in den Hohlraum der Luftfeder kann es dazu kommen, daß der obere Bereich des Abrollkolbens, der zuerst in die Luftfeder eintaucht, den Luftfederbalg berührt. Aufgrund der Reibung kann es in diesem Fall zu einer Beschädigung des Luftfederbalges kommen. Bei der DE-AS 1 048 165 scheint das Problem dadurch gelöst zu sein, daß der Abrollkolben kurz ausgebildet ist, so daß ein tiefes Eintauchen des Abrollkolbens in den Luftfederbalg nicht auftritt. Dies verkürzt jedoch die möglichen Federwege und damit den Komfort des Kraftfahrzeuges, die mit der Luftfeder ausgestattet sind.

Der Erfindung liegt die Aufgabe zugrunde, das eingangs erläuterte System derart weiterzubilden, daß ein tiefes Eintauchen des Abrollkolbens in den Luftfederbalg möglich ist, ohne daß der Luftfederbalg beschädigt wird.

Die Aufgabe wird durch den Anspruch 1 gelöst.

Durch die Erfindung wird der Vorteil erreicht, daß der Abrollkolben tief in den Luftfederbalg eintauchen kann, ohne diesen zu berühren, so daß eine Beschädigung ausgeschlossen ist. Somit können mit der erfindungsgemäßen Luftfeder auch große Federwege realisiert werden, ohne Gefahr zu laufen, den Luftfederbalg zu beschädigen.

Weitere Vorteile der Erfindung sind darin zu sehen, daß die Schubkräfte, die in dem Luftfederbalg wirken, deutlich reduziert werden. Aufgrund dessen erhöht sich die Lebensdauer der Luftfederbälge beträchtlich. Es ist ferner möglich, den Luftfederbalg aus Materialien herzustellen, die aufgrund ihrer Materialbeschaffenheit bisher für die Herstellung eines stark belasteten Luftfederbalges als ungeeignet galten, wie z. B. zugsteife Aramidgarne (Kevlar etc.), die Komfortvorteile bringen. Es ist ebenfalls möglich, einen Luftfederbalg mit einem einfachen Aufbau einzusetzen, der dennoch die gleiche Lebensdauer aufweist wie die bisher verwendeten Luftfederbälge in herkömmlichen Systemen. Beispielsweise kann ein Luftfederbalg mit einer verringerten Anzahl von Festigkeitsträgern eingesetzt werden, der entsprechend einfach und damit kostengünstig hergestellt werden kann. Ein weiterer Vorteil der Erfindung ist schließlich darin zu sehen, daß durch die Krümmung des Kolbens eine gezielte Schrägstellung der druckwirksamen Fläche bzw. der Abrollfalte des Federbalges herbeigeführt werden kann. Mit Hilfe der gezielten Schrägstellung kann anderen Kräften innerhalb des Luftfedermodules entgegengewirkt werden, es kann beispielsweise ein Querkraftausgleich erzielt werden.

Eine vorteilhafte Weiterbildungen der Erfindung ist Gegenstand des Unteranspruches 2.

Ein Ausführungsbeispiel und weitere Vorteile der Erfindung werden im Zusammenhang mit den nachstehenden Figuren erläutert, darin zeigt:
- Fig. 1: ein System, enthaltend einen Luftfederbalg und einen Abrollkolben, in schematischer Darstellung
- Fig. 2: ein System, enthaltend einen Luftfederbalg und einen Abrollkolben, in schematischer Darstellung.
- Fig. 3: ein System, enthaltend einen Luftfederbalg und einen Abrollkolben, in schematischer Darstellung.

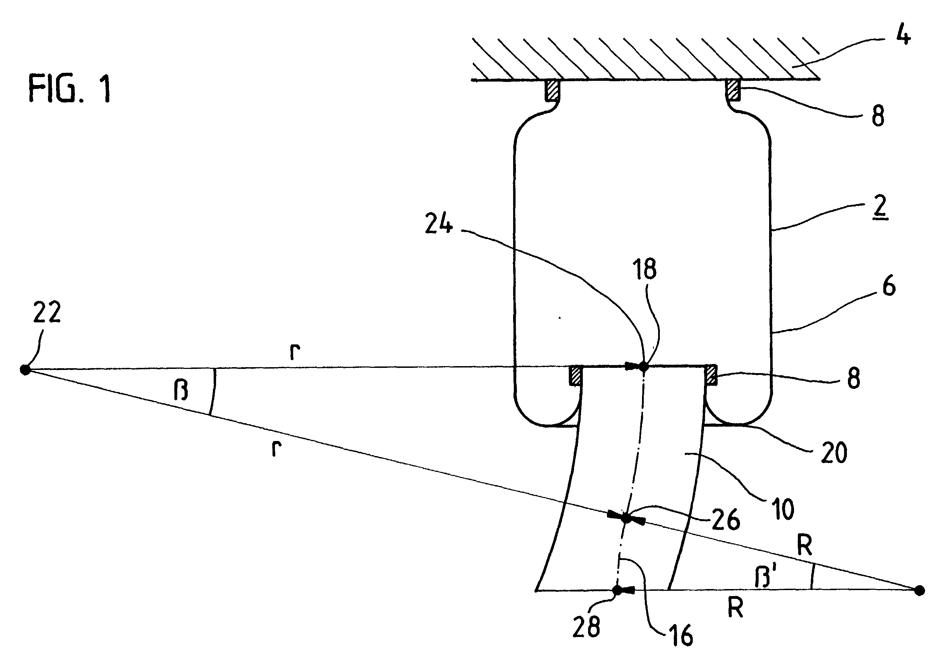

Figur 1 zeigt ein System 2, das einen Luftfederbalg 6 enthält, der zwischen einer Deckplatte 4 und einem Abrollkolben 10, beispielsweise mit Hilfe von Spannringen 8, eingespannt ist. Der Luftfederbalg 6 umschließt einen luftdicht abgeschlossenen Raum und bildet eine Luftfeder 6. Der Abrollkolben 10 ist relativ zu dem Luftfederbalg 6 bewegbar angeordnet, wobei die Bewegung des Abrollkolbens durch eine gekrümmte Bahn 16 vorgegeben ist. Im Folgenden wird erläutert, was unter der Formulierung, daß "die Bewegung des Abrollkolbens durch eine gekrümmte Bahn vorgegeben ist", zu verstehen ist:

In der Figur 1 ist der Zustand gezeigt, in dem der Abrollkolben 10 ganz aus dem Luftfederbalg 6 herausgezogen ist. In diesem Zustand wird ein festliegender Punkt 18 definiert, der im Zentrum der Abrollfalte 20 liegt und der den Anfangspunkt der gekrümmten Bahn 16 bildet. In dem Punkt 18 weist die gekrümmte Bahn 16 einen Krümmungsradius r auf, der einen Drehpunkt 22 festlegt. Der Krümmungsradius r wird auf der gekrümmten Bahn 16 noch über einen Winkel β beibehalten. Der Punkt 24 des Abrollkolbens 10, der in der Figur 1 gezeigten Ausgangsposition mit dem Punkt 18 zusammenfällt, wird aus dieser Ausgangslage um das Kreissegment rβ verdreht und der Abrollkolben 10 taucht in den Luftfederbalg 6 ein. Dabei wird die gekrümmte Bahn 16 "mitgenommen", so daß, nachdem das Kreissegment rβ zurückgelegt ist, der Punkt 26 in den Punkt 18 zu liegen kommt. Ab dem Punkt 26 weist die gekrümmte Bahn 16 einen anderen Krümmungsradius R auf, der über den Winkelbereich β' beibehalten wird. Kommt beim Eintauchen der Punkt 26 also auf den Punkt 18 zu liegen, so wird bei einem weiteren Eintauchen des Abrollkolbens 10 in den Luftfederbalg 6 die gekrümmte Bahn 16 mitgenommen und der Punkt 26 über einen Winkelbereich β' auf einer Kreisbahn bewegt, die den Radius R hat. Schließlich kommt bei einem komplett eingetauchten Abrollkolben 10 der Punkt 28 auf dem Punkt 18 zu liegen.

Die in der Figur 1 gezeigte gekrümmte Bahn 16 liegt vollständig in der Zeichenebene, dies ist jedoch nicht notwendigerweise so. Vielmehr kann die gekrümmte Bahn 16 nahezu beliebig aussehen. Der Verlauf der gekrümmten Bahn 16 wird allein dadurch bestimmt, wie der Abrollkolben 10 gegenüber dem Luftfederbalg 6 gelagert ist. Die Bewegung des Abrollkolbens ist festgelegt durch den Krümmungsradius der gekrümmten Bahn 16 und durch den Winkelbereich, über den die gekrümmte Bahn diesen Krümmungsradius beibehält.

Bei dem in der Figur 1 gezeigten Beispiel ist der Abrollkolben 10 gekrümmt, wobei die Krümmung des Abrollkolbens 10 zumindest bereichsweise die gleiche Orientierung hat wie die Krümmung der gekrümmten Bahn 16. Dies ist zwischen den Punkten 24 und 26 der gekrümmten Bahn 16 der Fall, wohingegen zwischen den Punkten 26 und 28 die Orientierung der Krümmung des Abrollkolbens 10 der Orientierung der Krümmung der gekrümmten Bahn 16 entgegengesetzt ist.

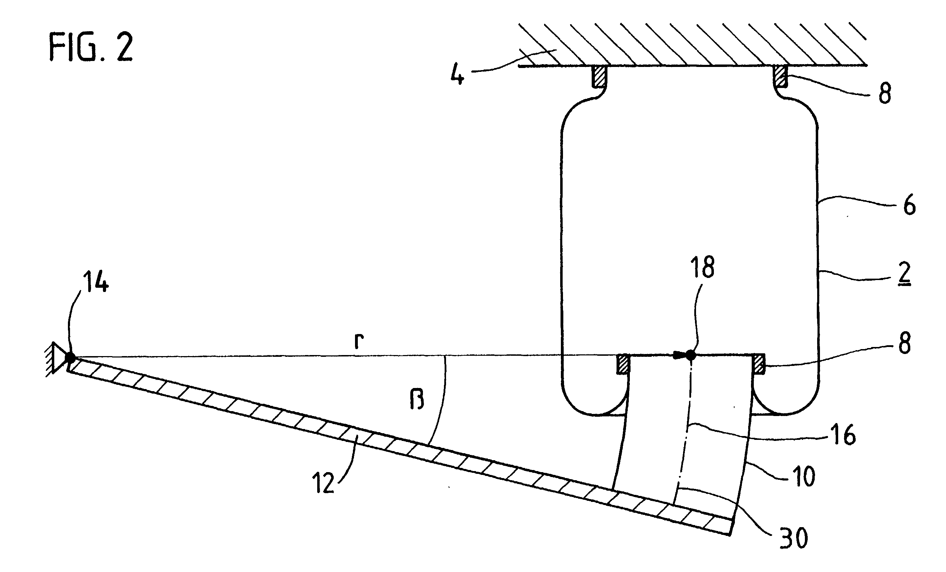

Figur 2 ist kein Ausführungsbeispiel der Erfindung, erleichtert aber deren Verständnis.

Figur 2 zeigt ein System 2, enthaltend einen Luftfederbalg, der zwischen einer Deckplatte 4 und einem Abrollkolben 10, z. B. mit Hilfe von Spannringen 8, eingespannt ist. Der Abrollkolben 10 ist auf einem Element 12, beispielsweise einem Längslenker, befestigt. Das Element ist in einem Befestigungspunkt 14 drehbar gelagert, wobei bei dem in der Figur 2 gezeigten Beispiel die Drehachse im Punkt 14 senkrecht auf der Zeichenebene steht. Die Figur 2 zeigt das System in dem Zustand, in dem der Abrollkolben 10 ganz aus dem Luftfederbalg 6 herausgezogen ist. In diesem Zustand hat die gekrümmte Bahn 16 im Punkt 18 einen Krümmungsradius r, der durch den Abstand zwischen dem Punkt 14 und dem Punkt 18 vorgegeben ist. Diesen Krümmungsradius r weist die gekrümmte Bahn 16 über den gesamten β auf. Der Abrollkolben 10 bewegt sich relativ zu dem Luftfederbalg 6, einem Kreisbahnsegment, das durch den Radius r und durch den Winkel β vorgegeben ist.

Bei dem in der Figur 2 gezeigten Ausführungsbeispiel ist der Abrollkolben so ausgebildet, daß die mittlere Krümmungslinie 30 des Abrollkolbens 10 der gekrümmten Bahn 16 des Abrollkolbens entspricht.

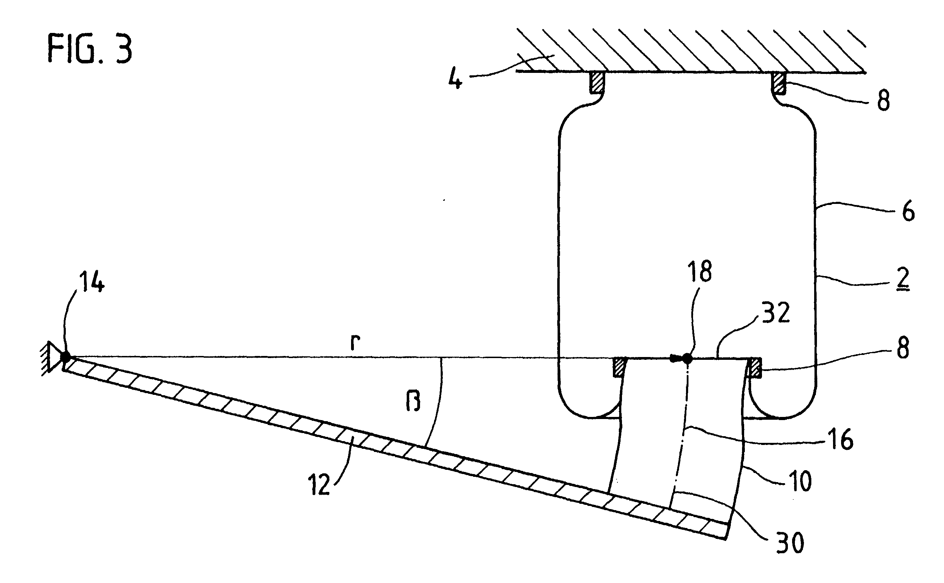

Figur 3 zeigt ein System 2, das an sich genauso aufgebaut ist, wie das in der Figur 2 gezeigte System. Der einzige Unterschied ist darin zu sehen, daß der Abrollkolben 10 an dem Ende 32, das der Deckplatte 4 zugewandt ist, eine Krümmung aufweist, dessen Orientierung der Orientierung der gekrümmten Bahn 16 im Anfangsbereich entgegengesetzt ist. Taucht der in der Figur 3 gezeigte Abrollkolben 10 so in den Luftfederbalg 6 ein, wie es durch die gekrümmte Bahn 16 vorgegeben ist, so kommt es nicht so schnell zu einer Berührung zwischen dem Abrollkolben 10 und dem Luftfederbalg 6 wie bei dem in der Figur 2 gezeigten System. Durch die Ausbildung des Abrollkolbens 10 gemäß der Figur 3 werden also Freigangvorteile erzielt.

### Bezugszeichenliste

- 2: System
- 4: Deckplatte
- 6: Luftfederbalg
- 8: Spannring
- 10: Abrollkolben
- 12: Element
- 14: Befestigungspunkt
- 16: gekrümmte Bahn
- 18: Punkt
- 20: Abrollfalte
- 22: Drehpunkt
- 24: Punkt
- 26: Punkt
- 28: Punkt
- 30: Krümmungslinie
- 32: Ende

## Patentansprüche

1. System (2), das folgende Bestandteile enthält:
- einen Luftfederbalg (6), der zwischen einer Deckplatte (4) und einem Abrollkolben (10) eingespannt ist
- einen gekrümmten Abrollkolben (10), der relativ zu der Deckplatte (4) des Luftfederbalgs (6) bewegbar angeordnet ist, wobei die Bewegung des Abrollkolbens (10) durch eine gekrümmte Bahn (16) vorgegeben ist und die Krümmung des Abrollkolbens (10) zumindest bereichsweise die gleiche Orientierung hat wie die Krümmung der Bahn (16), wobei bei einer Bewegung des Abrollkolbens (10) die Luftfeder (6) unter Ausbildung einer Abrollfalte (20) auf diesem abrollt,
**dadurch gekennzeichnet, daß**
- die gekrümmte Bahn (16) im Anfangspunkt (18), der bei aus dem Luftfederbalg (6) herausgezogenen Abrollkolben (10) durch das Zentrum der Abrollfalte (20) gebildet wird, eine bestimmte Krümmung aufweist und daß der Abrollkolben (10) an dem Ende (32), das der Deckplatte (4) zugewandt ist, eine Krümmung aufweist, die wesentlich kleiner ist als die Krümmung im Anfangspunkt (18) der gekrümmten Bahn (16), oder daß
- die Krümmung des Abrollkolbens (10) an dem Ende (32), das der Deckplatte (4) zugewandt ist, der Krümmung im Anfangspunkt (18) der gekrümmten Bahn (16) entgegengesetzt ist.

2. System (2) nach einem der Anspruch 1, **dadurch gekennzeichnet, daß** die mittlere Krümmungslinie (30) des Abrollkolbens (10) zumindest bereichsweise den gleichen Krümmungsradius aufweist wie die gekrümmte Bahn (16).

## Claims

1. System (2) which comprises the following components:
- an air suspension bellows (6), which is clamped between a cover plate (4) and a roll-off piston (10)
- a curved roll-off piston (10), which is arranged so that it can move in relation to the cover plate (4) of the air suspension bellows (6), the movement of the roll-off piston (10) being predefined by a curved path (16) and the curvature of the roll-off piston (10), at least in some segments, having the same orientation as the curvature of the curved path (16), the air spring (6), under a movement of the roll-of piston (10), forming a rolling lobe (20) and rolling on said piston, **characterized in that**
- the curved path (16) has a specific curvature at the starting point (18), which with the roll-off piston (10) drawn out of the air suspension bellows (6) is formed by the centre of the rolling lobe (20), and that the roll-off piston (10), at the end (32) facing the cover plate (4), has a curvature which is substantially smaller than the curvature at the starting point (18) of the curved path (16), or that
- the curvature of the roll-off piston (10) at the end (32) facing the cover plate (4) is opposed to the curvature at the starting point (18) of the curved path (16).

2. System (2) according to Claim 1, **characterized in that** the curvature centreline (30) of the roll-off piston (10), at least in some segments, has the same radius of curvature as the curved path (16).

## Revendications

1. Système (2), contenant les constituants suivants :
- un soufflet de ressort pneumatique (6) qui est serré entre une plaque de recouvrement (4) et un piston de déroulage (10),
- un piston de déroulage courbe (10) qui est disposé de manière mobile par rapport à la plaque de recouvrement (4) du soufflet de ressort pneumatique (6), le mouvement du piston de déroulage (10) étant prédéfini par une trajectoire courbe (16) et la courbure du piston de déroulage (10) ayant au moins en partie la même orientation que la courbure de la trajectoire (16), lors d'un déplacement du piston de déroulage (10), le ressort pneumatique (6) roulant sur celui-ci en formant un pli de déroulage (20),
**caractérisé en ce que**
- la trajectoire courbe (16) présente, au point de départ (18), qui est formé par le centre du pli de déroulage (20) lorsque le piston de déroulage (10) est retiré du soufflet de ressort pneumatique (6), une courbure déterminée et **en ce que** le piston de déroulage (10) présente à l'extrémité (32) qui est tournée vers la plaque de recouvrement (4), une courbure qui est substantiellement plus petite que la courbure au point de départ (18) de la trajectoire courbe (16) ou **en ce que**
- la courbure du piston de déroulage (10) à l'extrémité (32) qui est tournée vers la plaque de recouvrement (4), est opposée à la courbure au point de départ (18) de la trajectoire courbe (16).

2. Système (2) selon la revendication 1, **caractérisé en ce que** la ligne de courbure médiane (30) du piston de déroulage (10) présente au moins en partie le même rayon de courbure que la trajectoire courbe (16).
